# EUROPÄISCHE PATENTSCHRIFT

(11) **EP 4 276 771 B1**
(45) Veröffentlichungstag und Bekanntmachung des Hinweises auf die Patenterteilung: **12.03.2025**
(21) Anmeldenummer: 22172725.8
(22) Anmeldetag: 11.05.2022
(51) Int. Cl.: G06V 20/52, G06V 40/10

(54) **VERFAHREN UND VORRICHTUNG ZUR ANONYMISIERUNG EINES ERFASSTEN BILDES EINER INDUSTRIEANLAGE**
METHOD AND DEVICE FOR ANONYMIZING A CAPTURED IMAGE IN AN INDUSTRIAL INSTALLATION
PROCÉDÉ ET DISPOSITIF POUR ANONYMISER UNE IMAGE D'UNE INSTALLATION INDUSTRIELLE

(43) Veröffentlichungstag der Anmeldung: 15.11.2023
(73) Patentinhaber: SICK AG, 79183 Waldkirch (DE)
(72) Erfinder: Wehrle, Klemens, 79346 Endingen (DE); Kaltenbach, Thomas, 79261 Gutach (DE)
(74) Vertreter: Manitz Finsterwald Patent- und Rechtsanwaltspartnerschaft mbB

(56) Entgegenhaltungen:
- EP-A1- 3 723 049
- WO-A1-2021/243465
- DE-A1- 102016 223 859
- GB-A- 2 596 037
- PACHECO ANDRE ET AL: "A small-scale educational workbench for Industry 4.0", IECON 2019 - 45TH ANNUAL CONFERENCE OF THE IEEE INDUSTRIAL ELECTRONICS SOCIETY, IEEE, vol. 1, 14 October 2019 (2019-10-14), pages 3127 - 3132, XP033670505, DOI: 10.1109/IECON.2019.8927746

## Beschreibung

Die Erfindung betrifft ein Verfahren und eine Vorrichtung zur anonymisierten Bilderfassung in einer Industrieanlage, wie beispielsweise einer Warenlagerungs-, Warentransport und/oder Warenverarbeitungsanlage.

In Industrieanlagen werden häufig Verfahren und Vorrichtungen zur Bilderfassung eingesetzt, um Waren- oder Prozessverläufe zu überwachen und zu kontrollieren.

Dabei werden jedoch häufig personenbezogene Merkmale miterfasst, was nicht datenschutzkonform sein kann. Die personenbezogenen Merkmale benötigen zudem Speicherplatz und können nachfolgende Verarbeitungsschritte der erfassten Bilder aufwändiger gestalten, wenn z.B. größere Bilddateien verarbeitet werden müssen.

Aus der DE 10 2016 223 859 A1 ist eine Kamera zur Überwachung eines Überwachungsbereiches offenbart. Die EP 3 723 049 A1 beschreibt ein System zur Anonymisierung von Inhalten um die Privatsphäre zu schützen. In der GB 2 596 037 A ist eine Vorrichtung zur Datenanonymisierung beschrieben. Die WO 2021/243465 A1 beschreibt ein System zur automatischen Verarbeitung von Barcodes an persönlichen Schutzgegenständen von Personen in einem Arbeitsbereich.

Es ist daher eine Aufgabe der vorliegenden Offenbarung, ein verbessertes Verfahren und eine verbesserte Vorrichtung zur anonymisierten Bilderfassung für Industrieanlagen bereitzustellen, welche insbesondere eine nachfolgende Speicherung und Verarbeitung der Bilder vereinfacht.

Diese Aufgabe wird zunächst gelöst durch ein Verfahren zur anonymisierten Bilderfassung in einer Industrieanlage gemäß dem unabhängigen Anspruch 1.

In einem ersten Schritt des Verfahrens wird ein Bild erfasst, beispielsweise mittels einer Bilderfassungseinheit, wie einer Kamera oder einen Bildsensor, insbesondere einer Zeilen- oder Matrixkamera. Insbesondere handelt es sich bei der Bilderfassungseinheit um eine sogenannte Präsentationskamera. Dabei wird regelmäßig, kontinuierlich und/oder anlassbezogen, beispielsweise durch Auslösen einer Lichtschranke und/oder eines Bedienelements in der Industrieanlage ein Bild erfasst.

Das Bild umfasst dabei optoelektronisch lesbaren Code, wie beispielsweise einen Barcode, einen QR-Code oder einen Semacode. Der Code ist dabei beispielsweise auf einem Gegenstand angebracht oder aufgebracht, der in der Industrieanlage gelagert wird, wie beispielsweise einer Ware oder einem Paket.

Das Bild umfasst weiter zumindest ein personenbezogenes Merkmal, wie beispielsweise eine menschliche Hand, die den Gegenstand hält, insbesondere vor die Kamera zu Zwecken der Erfassung des Bildes. Beispielsweise kann das personenbezogene Merkmal auch einen Teil eines Fingerabdrucks umfassen. Dabei kann das personenbezogene Merkmal auch Kleidung, insbesondere einen oder mehrere Ärmel, und/oder Schmuck, wie beispielsweise ein Ring oder eine Uhr umfassen. Bei dem personenbezogenen Merkmal handelt es sich um ein Merkmal, das Rückschlüsse auf die Person zulässt, insbesondere ein Merkmal, durch das sich die Person identifizieren, weiter insbesondere eindeutig identifizieren lässt.

In einem weiteren Schritt des Verfahrens wird dann dieses personenbezogene Merkmal in dem Bild identifiziert, beispielsweise mittels einer Recheneinheit, wie dies noch später im Detail beschrieben wird.

In einem weiteren Schritt des Verfahren wird das zuvor identifizierte personenbezogene Merkmal in dem Bild unkenntlich gemacht. Unkenntlich meint vorliegend insbesondere unkenntlich für das menschliche Auge, kann aber auch unkenntlich für eine Recheneinheit umfassen. Insbesondere ist das Unkenntlichmachen irreversibel, kann also nicht rückgängig gemacht werden, weder durch einen Menschen noch durch eine Recheneinheit.

Durch das Verfahren zur anonymisierten Bilderfassung ist es möglich, Bilder die in einer Industrieanlage erfasst werden, ohne Berücksichtigung von Datenschutz-Vorgaben zu verarbeiten, da die personenbezogenen Merkmale unkenntlich gemacht worden sind und ein nachträglicher Rückschluss, beispielsweise bei einer erneuten und/oder späteren Verarbeitung des erfassten Bildes zu anderen Zwecken auf eine Person nicht mehr möglich ist.

Insbesondere kann das so erfasste Bild auch unternehmensexternen und/oder sich nicht einer Datenschutz-Vorgabe unterwerfenden Kooperationspartnern zur Verfügung gestellt werden.

Von besonderem Vorteil ist, dass die Bilder durch die unkenntlich gemachten Merkmale auch weniger Informationen enthalten und damit auch weniger Speicherplatz benötigen. Insbesondere werden die originalen Bilder gelöscht und nur die Bilder mit den entfernten oder unkenntlich gemachten Merkmalen gespeichert. Die weitere Verarbeitung der Bilder benötigt dementsprechend weniger Rechenleistung und Speicher.

Bevorzugt, jedoch nicht Teil der vorliegenden Erfindung, werden die Bilder mit den unkenntlich gemachten personenbezogenen Merkmalen dafür verwendet, die Steuerung der Industrieanlage zu beeinflussen. So kann z.B. anhand des lesbaren Codes eine vorbestimmte Aktion der Industrieanlage ausgelöst werden, durch welche z.B. eine Weiterverarbeitung eines Werkstücks oder dergleichen erfolgt.

Das Verfahren kann dadurch weitergebildet werden, dass das Identifizieren des personenbezogenen Merkmals in dem Bild ein Segmentieren des personenbezogenen Merkmals in dem Bild umfasst. Ein Segmentieren meint vorliegend eine Unterteilung des Bildes in zusammengehörige Elemente und eine anschließende Klassifizierung dieser Unterteilungen bzw. Segmente in einzelne, insbesondere vorgegebene Klassen. Dabei können auch Algorithmen zur Merkmalsextraktion verwendet werden sowie eine Bildvorverarbeitung erfolgen. Durch das Segmentieren wird für bestimmte identifizierte Bereiche eine Aussage getroffen, insbesondere ob es sich dabei um personenbezogene Merkmale handelt.

Zur Segmentierung können bekannte Verfahren eingesetzt werden, wie beispielsweise pixel-, kanten- und/oder regionenorientierte Verfahren. Zusätzlich oder alternativ können modellbasierte und/oder texturbasiere Verfahren zur Segmentierung eingesetzt werden.

Durch diese Weiterbildung wird eine besonders effiziente Lösung bereitgestellt. Insbesondere wird so erreicht, dass lediglich die Bereiche des erfassten Bildes, die personenbezogene Merkmale betreffen, auch bearbeitet, d.h. unkenntlich gemacht werden.

Das Verfahren kann dadurch weitergebildet werden, dass das Identifizieren und/oder das Segmentieren des personenbezogenen Merkmals in dem Bild mithilfe eines neuronalen Netzwerks erfolgt.

Ein neuronales Netzwerk, was auch als neuronales Netz und/oder künstliches neuronales Netz bezeichnet werden kann, ist eine computerbasierte künstliche Intelligenz. Insbesondere kann das Identifizieren bzw. Segmentieren auch mithilfe eines durch einen Deep-Learning-Algorithmus trainierten neuronalen Netzwerks erfolgen, sodass auch neue erfasste Bilder, die das neuronale Netzwerk nicht während des Trainierens verarbeitet hat, dennoch segmentieren kann.

Insbesondere kann das Identifizieren bzw. Segmentieren mithilfe einer speziell dafür vorgesehenen Recheneinheit erfolgen, wie beispielsweise Mikrorecheneinheiten mit einer hohen Parallelisierung oder speicherprogrammierbare Bausteine.

Durch diese Weiterbildung wird eine besonders leistungsfähige Lösung bereitgestellt. Insbesondere wird durch das neuronale Netzwerk eine besonderes zuverlässige Methode des Identifizierens bzw. Segmentierens des personenbezogenen Merkmals erreicht.

Das Verfahren kann dadurch weitergebildet werden, dass das Unkenntlichmachen des personenbezogenen Merkmals in dem Bild ein Verpixeln des personenbezogenen Merkmals in dem Bild umfasst.

Ein Verpixeln meint vorliegend, dass die ursprünglich feinpixelige Auflösung des personenbezogenen Merkmals durch eine wesentlich gröbere Auflösung ersetzt wird, sodass anstelle einzelner individueller Teilmerkmale des personenbezogenen Merkmals sichtbar sind, lediglich unkenntliche Pixel in grober Struktur eingesetzt werden. Dies kann durch einen geeigneten Verpixelungsalgorithmus erfolgen.

Das Verfahren kann dadurch weitergebildet werden, dass das Unkenntlichmachen des personenbezogenen Merkmals in dem Bild ein Entfernen des personenbezogenen Merkmals in dem Bild umfasst.

Ein Entfernen meint vorliegend ein Löschen der Bildpunkte, die das personenbezogene Merkmal betreffen und/oder ein Ersetzen dieser Bildpunkte durch einfarbige Bildpunkte, wie beispielsweise weiße oder schwarze Bildpunkte.

Erfindungsgemäß umfasst das Verfahren weiter ein Auslesen des optoelektronisch lesbaren Codes.

Ein Auslesen des optoelektronisch lesbaren Codes erfolgt mittels geeigneter Auslesealgortihmen. Das Ergebnis des ausgelesenen Codes, beispielsweise eine Seriennummer, wie eine Verfolgungsnummer, oder ein weiterer Inhalt des Codes kann dann zusammen mit einem Ort und/oder einem Zeitpunkt des Auslesens gespeichert werden.

Das Verfahren kann dadurch weitergebildet werden, dass das Verfahren weiter ein Speichern des Bildes mit dem unkenntlich gemachten personenbezogenen Merkmal umfasst.

Das Speichern kann insbesondere zusammen mit dem ausgelesenen Code und einem Ort und/oder einem Zeitpunkt des Auslesens gespeichert werden.

Durch diese Weiterbildung ist es möglich, ein Passieren eines bestimmten Wegpunkts oder einen Ablageort des Gegenstands zu dokumentieren. Mit der Industrieanlage bearbeitete oder hergestellte Gegenstände können so innerhalb der Industrieanlage verfolgt werden.

Das Verfahren kann dadurch weitergebildet werden, dass das Speichern des Bildes ein Übertragen an eine entfernte Speichereinheit umfasst.

Eine entfernte Speichereinheit ist dabei insbesondere eine von der Bilderfassungseinheit und der Industrieanlage entfernte Speichereinheit. Insbesondere kann es sich bei der entfernten Speichereinheit um eine Speichereinheit handeln, auf der das Bild mit dem unkenntlich gemachten personenbezogenen Merkmal zu Nachweiszwecken aufbewahrt wird. Die entfernte Speichereinheit kann dabei insbesondere in einem anderen Land angeordnet sein als die Bilderfassungseinheit bzw. die Industrieanlage.

Das Verfahren ist dadurch weitergebildet , dass das Verfahren weiter ein Zuschneiden des Bildes auf einen Teilbereich umfassend den optoelektronisch lesbaren Code umfasst.

Ein Zuschneiden, was auch als Freistellen bezeichnet werden kann, meint vorliegend ein Entfernen von Bildinhalten, die nicht den optoelektronisch lesbaren Code umfassen. Dabei kann das Zuschneiden auch ein Abschneiden eines Teils des zuvor oder auch nachher unkenntlich gemachten personenbezogenen Merkmals erfolgen.

Das Zuschneiden kann pauschal erfolgen, das bedeutet immer um einen bestimmten Zuschneidefaktor, und/oder dynamisch, beispielsweise basierend auf einer Identifikation des personenbezogenen Merkmals und/oder des optoelektronisch lesbaren Codes.

Wenn das Zuschneiden vor dem Identifizieren bzw. Segmentieren und/oder vor dem Unkenntlichmachen erfolgt, was jedoch nicht Teil der vorliegenden Erfindung ist, wird weniger Rechenleistung für das Identifizieren bzw. Segmentieren und/oder für das Unkenntlichmachen benötigt, da weniger Bildinhalte zu verarbeiten sind.

Dabei kann das Zuschneiden sowohl vor dem Übertragen an die entfernte Speichereinheit erfolgen als auch danach. Alternativ kann das Zuschneiden auch erfolgen ohne dass das Bild an eine entfernte Speichereinheit übertragen wird. Hierdurch wird der Speicherplatz in der Speichereinheit, sowohl lokal als auch entfernt, reduziert.

Durch diese Weiterbildung wird besonders wenig Speicherplatz und/oder Rechenleistung benötigt.

Das Verfahren kann dadurch weitergebildet werden, dass das Verfahren weiter ein Verschlüsseln des erfassten Bildes, ein Übertragen des erfassten Bildes an eine entfernte Recheneinheit und ein Entschlüsseln des erfassten Bildes an der entfernten Recheneinheit umfasst.

Das Verschlüsseln kann dabei über gängige Verschlüsselungsalgorithmen erfolgen. Beispielsweise kann das erfasste Bild mittels SFTP an eine entfernte Recheneinheit erfolgen. Alternativ oder zusätzlich kann das erfasste Bild beispielsweise mit einem symmetrischen oder asymmetrischen Verschlüsselungsprotokoll verschlüsselt und entschlüsselt werden.

Insbesondere kann das Verschlüsseln unmittelbar nach dem Erfassen des Bildes erfolgen, insbesondere bevor eine Identifikation und/oder eine Unkenntlichmachung des personenbezogenen Merkmals erfolgt und das somit unverarbeitete Bild an eine entfernte Recheneinheit übertragen und dort entschlüsselt werden.

Bei der entfernten Recheneinheit kann es sich um eine unmittelbar mit der entfernten Speichereinheit handeln oder eine davon verschiedene bzw. entfernte.

Durch diese Weiterbildung wird verhindert, dass jemand das erfasste Bild mit den personenbezogenen Merkmalen abfängt und unberechtigt einen Rückschluss auf die Person ziehen kann.

Das Verfahren kann dadurch weitergebildet werden, dass das Identifizieren und/oder das Segmentieren des personenbezogenen Merkmals in dem Bild an der entfernten Recheneinheit erfolgt.

Insbesondere kann dazu die entfernte Recheneinheit besonders ausgebildet sein, das Identifizieren bzw. Segmentieren durchzuführen und insbesondere auch für den Einsatz eines geeigneten, insbesondere für diese Anwendung trainierten neuronalen Netzwerks ausgelegt sein. Weiter insbesondere kann dazu die entfernte Recheneinheit dazu ausgelegt sein, besondere Datenschutz-Vorgaben zu erfüllen, beispielsweise durch den Ort und/oder eine Zertifizierung der entfernten Recheneinheit.

Durch diese Weiterbildung ist es möglich, dass die Unkenntlichmachung besonders Datenschutz-Konform ablaufen kann und nicht in der Industrieanlage erfolgt. Die Eingangs genannte Aufgabe wird ebenfalls gelöst durch eine Vorrichtung zur anonymisierten Bilderfassung in einer Industrieanlage gemäß dem unabhängigen Anspruch 10**.**

Bezüglich der weiteren Ausgestaltungen und deren Vorteile wird auf die obigen Ausführungen zum Verfahren zur anonymisierten Bilderfassung in einer Industrieanlage verwiesen.

Insbesondere ist die Vorrichtung zur anonymisierten Bilderfassung in einer Industrieanlage ausgebildet, Ausführungsformen des zuvor beschriebenen Verfahrens zur anonymisierten Bilderfassung in einer Industrieanlage teilweise oder vollständig auszuführen.

Ausführungsformen des Verfahrens und der Vorrichtung zur anonymisierten Bilderfassung in einer Industrieanlage werden nun im Zusammenhang mit den folgenden Figuren im Detail beschrieben, wobei
- Fig. 1: eine schematische Ansicht einer Ausführungsform einer Vorrichtung zur anonymisierten Bilderfassung in einer Industrieanlage;
- Fig. 2: ein Flussdiagramm einer Ausführungsform eines Verfahrens zur anonymisierten Bilderfassung in einer Industrieanlage; und
- Fig. 3a-d: individuelle Schritte eines angewendeten Verfahrens zur anonymisierten Bilderfassung in einer Industrieanlage
zeigen. Gleiche Bezugszeichen bezeichnen dabei gleiche oder ähnliche Merkmale.

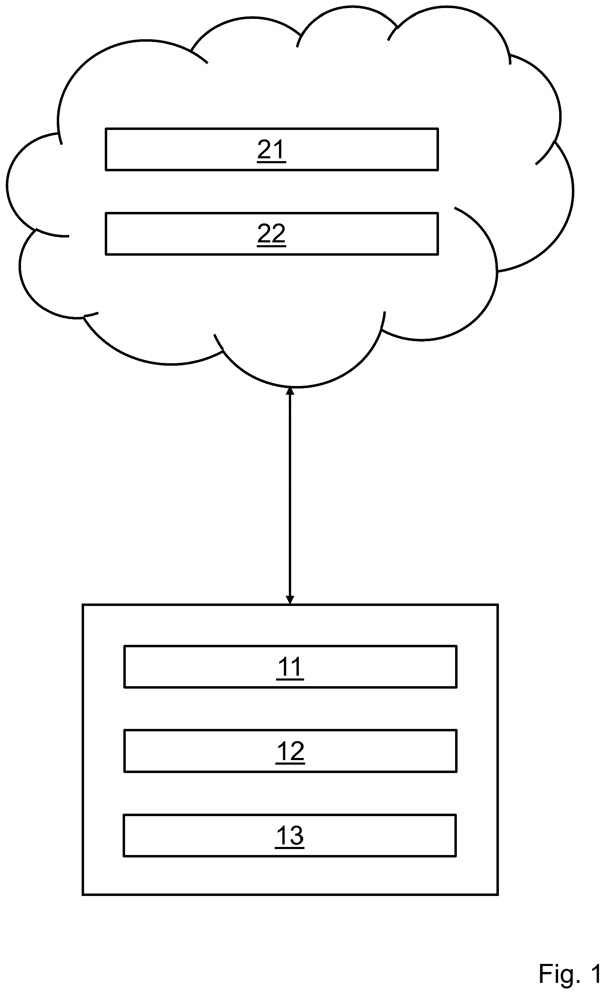

Fig. 1 zeigt eine schematische Ansicht einer Ausführungsform einer Vorrichtung 1 zur anonymisierten Bilderfassung in einer Industrieanlage.

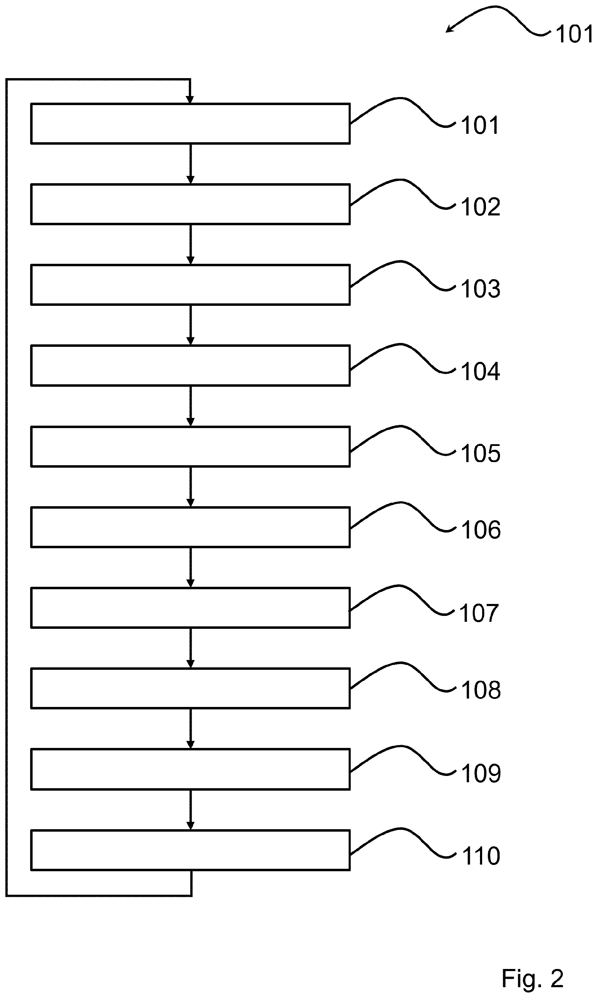

Die Vorrichtung 1 umfasst dabei zunächst eine lokale Einheit 10 und eine von der lokalen Einheit 10 entfernte Einheit 20. Insbesondere ist die entfernte Einheit 20 beispielhaft als Cloud-Dienst gezeigt, der Teile der Vorrichtung 1 bzw. Teilschritte eines Verfahrens 100, auch wie im Zusammenhang mit der folgenden Fig. 2 beschrieben, ausführen kann.

Die lokale Einheit 10 umfasst eine lokale Speichereinheit 11, eine lokale Recheneinheit 12 und eine Bilderfassungseinheit 13. Zusätzlich umfasst die lokale Einheit 10 eine drahtlose und/oder drahtgebundene Kommunikationseinheit, die aus Gründen der Übersichtlichkeit nicht abgebildet ist. Lokal meint vorliegend in bzw. an der Industrieanlage angeordnet bzw. ein Teil der Industrieanlage.

Die entfernte Einheit 20 umfasst eine entfernte Speichereinheit 21 und eine entfernte Recheneinheit 22. Zusätzlich umfasst die entfernte Einheit 20 eine drahtlose und/oder drahtgebundene Kommunikationseinheit, die aus Gründen der Übersichtlichkeit nicht abgebildet ist. Entfernt meint vorliegend räumlich beabstandet von der lokalen Einheit 10 und insbesondere nicht in der Industrieanlage angeordnet.

Insbesondere ist die entfernte Einheit ein oder mehrere Server, die an einem entfernten Ort aufgestellt sind und einen Cloud-Dienst bilden. Dabei wurde aus Gründen der Übersichtlichkeit die entfernte Speichereinheit 21 und die entfernte Recheneinheit 22 als demselben Cloud-Dienst zugehörig abgebildet.

Alternativ wird die Speichereinheit 21 von einem ersten Cloud-Dienst bereitgestellt und die Recheneinheit von einem zweiten, davon verschiedenen Cloud-Dienst bereitgestellt, wobei der erste Cloud-Dienst und der zweite Cloud-Dienst über eine drahtlose und/oder drahtgebundene Kommunikationseinheit verbunden sind.

Weiter insbesondere umfasst die entfernte Einheit 20 zumindest keine Bilderfassungseinheit bzw. kann die lokale Bilderfassungseinheit 13 neben einer Kommunikationseinheit die einzige lokale Einheit sein, die in der Industrieanlage angeordnet ist.

Die Vorrichtung 1 ist insbesondere dazu ausgebildet, das im Folgenden im Zusammenhang mit Fig. 2 beschriebene Verfahren auszuführen.

Fig. 2 zeigt ein Flussdiagramm einer Ausführungsform eines Verfahrens 100 zur anonymisierten Bilderfassung in einer Industrieanlage.

In einem ersten Schritt 101 des Verfahrens 100 wird ein Bild erfasst, das einen optoelektronisch lesbaren Code und ein personenbezogenes Merkmal umfasst.

In einem darauffolgenden Schritt 102 wird das erfasste Bild verschlüsselt.

In einem weiteren Schritt 103 wird das verschlüsselte Bild an eine entfernte Recheneinheit übertragen.

In einem darauffolgenden Schritt 104 wir das verschlüsselte Bild an der entfernten Recheneinheit entschlüsselt.

In einem weiteren Schritt 105 wird das personenbezogene Merkmal in dem entschlüsselten Bild durch die entfernte Recheneinheit durch Segmentieren mithilfe eines neuronalen Netzwerks identifiziert.

**In** einem darauffolgenden Schritt 106 wird das personenbezogene Merkmal in dem Bild durch ein Verpixeln des personenbezogenen Merkmals in dem Bild und/oder durch Entfernen des personenbezogenen Merkmals aus dem Bild unkenntlich gemacht.

In einem weiteren Schritt 107 wird das Bild auf einen Teilbereich umfassend den optoelektronisch lesbaren Code zugeschnitten.

In einem weiteren Schritt 108 wird der optoelektronisch lesbare Code ausgelesen.

In einem darauffolgenden Schritt 109 wird das Bild mit dem unkenntlich gemachten personenbezogenen Merkmal an eine entfernte Speichereinheit übertragen und dort in einem letzten Schritt 110 gespeichert. Anschließend kann das Verfahren 100 erneut mit dem Schritt 101 beginnen.

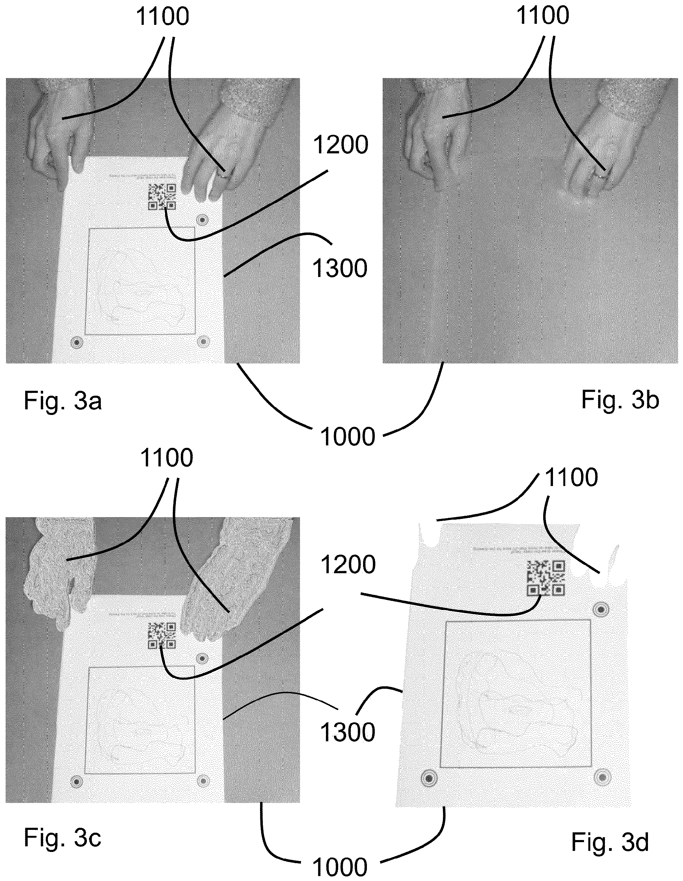

Fig. 3a-d zeigen einen Ablauf eines angewendeten Verfahrens zur anonymisierten Bilderfassung in einer Industrieanlage. Dabei wird in einem ersten Schritt ein Bild 1000 erfasst, das sowohl ein personenbezogenes Merkmal 1100 als auch einen optoelektronisch lesbaren Code 1200 umfasst, wie in Fig. 3a gezeigt.

Das personenbezogene Merkmal 1100 besteht in dem gezeigten Beispiel aus zwei Händen, wobei auch ein Teil des Kleidungsstücks, nämlich des Ärmels, sowie ein Ring abgebildet sind, die beispielhaft das personenbezogene Merkmal 1100 bilden.

Der optoelektronisch lesbare Code 1200 ist vorliegend als QR-Code ausgebildet und auf einem Gegenstand 1300 angebracht, der hier beispielhaft als rechteckiges Blatt Papier gezeigt ist.

Das in der Fig. 3a gezeigte Bild 1000 beschreibt das im Zusammenhang mit Fig. 2 beschriebenen im ersten Verfahrensschritt 101 erfasste Bild, wie dieses insbesondere beim Präsentieren des Gegenstands 1300 mithilfe der Hände einer Person vor einer Präsentationskamera erfolgt.

In einem weiteren Schritt wird dann in dem Bild 1000 das personenbezogene Merkmal 1100 identifiziert und zwar mithilfe eines von einem neuronalen Netzwerks ausgeführten Segmentier-Algorithmus, wie dies im Zusammenhang mit dem in Fig. 2 gezeigten Verfahrensschritt 105 beschrieben wurde.

Das Ergebnis dieses Schritts 105 ist in Fig. 3b gezeigt, in dem lediglich das personenbezogene Merkmal 1100 in dem Bild 1000 enthalten ist. Dies ist jedoch ausschließlich zu Verständniszwecken des Identifizierens bzw. Segmentierens so abgebildet. Tatsächlich ist auch der Gegenstand 1300 mit dem optoelektronisch lesbaren Code 1200 weiterhin in dem Bild 1000 enthalten bzw. stellt das in Fig. 3b gezeigte Bild nicht sämtliche vorhandenen Bildinformationen dar, sondern lediglich das Ergebnis der Identifizierung bzw. Segmentierung.

In einem weiteren Schritt wird dann das in dem Bild 1000 enthaltene personenbezogene Merkmal 1100 unkenntlich gemacht. Dies ist in Fig. 3c mit einem Verpixeln des personenbezogenen Merkmals 1300 dargestellt. Alternativ ist in Fig. 3d ein Entfernen bzw. Löschen des personenbezogenen Merkmals 1100 abgebildet. Dieses Unkenntlichmachen entspricht dem im Zusammenhang mit dem in Fig. 2 beschriebenen Verfahrensschritt 106.

Darüber hinaus wurde in dem in Fig. 3d gezeigten Bild 1000 der Bildausschnitt derart zugeschnitten, dass weitere, für das Auslesen des optoelektronischen Codes 1200 nicht notwendige Informationen, wie beispielsweise die Unterlage und auch Teile des personenbezogenen Merkmals entfernt worden sind, sodass das Bild 1000 wie in Fig. 3d gezeigt lediglich einen Teilbereich des Bildes 1000 umfasst, auf dem der optoelektronisch lesbare Code 1200 abgebildet ist. Dieses in Fig. 3d gezeigte Bild 1000 entspricht dem im Zusammenhang mit dem in Fig. 2 beschriebenen Verfahrensschritt 107 erzeugte Bild.

Durch die zuvor beschriebenen Ausführungsbeispiele werden effiziente Lösungen, welche zu geringerer Speicherbelastung und zu geringerer Rechenlast führen, ermöglicht, wobei die Ausführungsbeispiele gleichzeitig zur datenschutzkonformen Verarbeitung von Gegenständen durch Personen in einer Industrieanlage, wie beispielsweise einer Warenlagerungs-, Warentransport und/oder Warenverarbeitungsanlage beitragen.

### Bezugszeichenliste

- 1: Vorrichtung
- 10: lokale Einheit
- 11: lokale Speichereinheit
- 12: lokale Recheneinheit
- 13: Bilderfassungseinheit
- 20: entfernte Einheit
- 21: entfernte Speichereinheit
- 22: entfernte Recheneinheit
- 100: Verfahren
- 101: Verfahrensschritt
- 102: Verfahrensschritt
- 103: Verfahrensschritt
- 104: Verfahrensschritt
- 105: Verfahrensschritt
- 106: Verfahrensschritt
- 107: Verfahrensschritt
- 108: Verfahrensschritt
- 109: Verfahrensschritt
- 110: Verfahrensschritt
- 1000: erfasstes Bild
- 1100: personenbezogenes Merkmal
- 1200: optoelektronisch lesbarer Code
- 1300: Gegenstand

## Patentansprüche

1. Verfahren (100) zur Anonymisierung eines erfassten Bildes einer Industrieanlage,
mit den Schritten:
- Erfassen (101) eines Bildes (1000) mittels einer Bilderfassungseinheit (13), wobei das Bild eine Industrieanlage, einen optoelektronisch lesbaren Code (1200) und ein personenbezogenes Merkmal (1100) umfasst;
- Identifizieren (105) des personenbezogenen Merkmals (1100) in dem Bild (1000);
- Unkenntlichmachen (106) des personenbezogenen Merkmals (1100) in dem Bild (1000);
- danach Zuschneiden des Bildes (1000) auf einen Teilbereich umfassend den optoelektronisch lesbaren Code (1200) derart, dass weitere, für das Auslesen des optoelektronisch lesbaren Codes (1200) nicht notwendige Informationen entfernt werden; und
- Auslesen (108) des optoelektronisch lesbaren Codes (1200).

2. Verfahren (100) nach dem vorstehenden Anspruch 1,
wobei das Identifizieren (105) ein Segmentieren des personenbezogenen Merkmals (1100) in dem Bild (1000) umfasst.

3. Verfahren (100) nach dem vorstehenden Anspruch 2,
wobei das Identifizieren (105) und/oder das Segmentieren mithilfe eines neuronalen Netzwerks erfolgt.

4. Verfahren (100) nach einem der vorstehenden Ansprüche,
wobei das Unkenntlichmachen (106) ein Verpixeln des personenbezogenen Merkmals (1100) in dem Bild (1000) umfasst.

5. Verfahren (100) nach einem der vorstehenden Ansprüche,
wobei das Unkenntlichmachen (106) ein Entfernen des personenbezogenen Merkmals (1100) aus dem Bild (1000) umfasst.

6. Verfahren (100) nach einem der vorstehenden Ansprüche,
weiter umfassend den Schritt:
- Speichern (110) des Bildes mit dem unkenntlich gemachten personenbezogenen Merkmal (1100).

7. Verfahren (100) nach dem vorstehenden Anspruch 6,
wobei das Speichern (110) des Bildes ein Übertragen (109) an eine entfernte Speichereinheit (21) umfasst.

8. Verfahren (100) nach einem der vorstehenden Ansprüche,
weiter umfassend die Schritte:
- Verschlüsseln (102) des erfassten Bildes (1000);
- Übertragen (103) des erfassten Bildes (1000) an eine entfernte Recheneinheit (22); und
- Entschlüsseln (104) des erfassten Bildes (1000) an der entfernten Recheneinheit (22).

9. Verfahren (100) nach dem vorstehenden Anspruch 8, wobei das Identifizieren (105) und/oder das Segmentieren an der entfernten Recheneinheit (22) erfolgt.

10. Vorrichtung (10) zur Anonymisierung eines erfassten Bildes einer Industrieanlage, mit:
- einer Bilderfassungseinheit (13), die ausgebildet ist, ein Bild (1000) zu erfassen, wobei das Bild (1000) eine Industrieanlage, einen optoelektronisch lesbaren Code (1200) und ein personenbezogenes Merkmal (1100) umfasst;
- eine Speichereinheit (11, 21), die ausgebildet ist, das erfasste Bild (1000) zu Speichern; und
- eine Recheneinheit (12, 22), die ausgebildet ist, das personenbezogene Merkmal (1100) in dem Bild (1000) zu identifizieren und das personenbezogene Merkmal (1100) in dem Bild (1000) unkenntlich zu machen, wobei die Vorrichtung (10) weiter ausgebildet ist, danach das Bild (1000) auf einen Teilbereich umfassend den optoelektronisch lesbaren Code (1200) derart zuzuschneiden, dass weitere, für das Auslesen des optoelektronisch lesbaren Codes (1200) nicht notwendige Informationen entfernt werden, und den optoelektronisch lesbaren Code (1200) auszulesen.

## Claims

1. A method (100) for anonymizing an acquired image of an industrial plant, comprising the steps:
- acquiring (101) an image (1000) by means of an image acquisition unit (13), wherein the image comprises an industrial plant, an optoelectronically readable code (1200) and a personal feature (1100);
- identifying (105) the personal feature (1100) in the image (1000);
- obscuring (106) the personal feature (1100) in the image (1000);
- then cropping the image (1000) to a part region comprising the optoelectronically readable code (1200) such that further information not necessary for the reading out of the optoelectronically readable code (1200) is removed; and
- reading out (108) the optoelectronically readable code (1200).

2. A method (100) according to the preceding claim 1,
wherein the identifying (105) comprises segmenting the personal feature (1100) in the image (1000).

3. A method (100) according to the preceding claim 2,
wherein the identifying (105) and/or the segmenting takes/take place by means of a neural network.

4. A method (100) according to any one of the preceding claims,
wherein the obscuring (106) comprises pixelating the personal feature (1100) in the image (1000).

5. A method (100) according to any one of the preceding claims,
wherein the obscuring (106) comprises removing the personal feature (1100) from the image (1000).

6. A method (100) according to any one of the preceding claims,
further comprising the step:
- storing (110) the image with the obscured personal feature (1100).

7. A method (100) according to the preceding claim 6,
wherein the storing (110) of the image comprises a transmission (109) to a remote memory unit (21).

8. A method (100) according to any one of the preceding claims,
further comprising the steps:
- encrypting (102) the acquired image (1000);
- transmitting (103) the acquired image (1000) to a remote processing unit (22); and
- decrypting (104) the acquired image (1000) at the remote processing unit (22).

9. A method (100) according to the preceding claim 8, wherein the identifying (105) and/or the segmenting takes/take place at the remote processing unit (22).

10. An apparatus (10) for anonymizing an acquired image of an industrial plant, comprising:
- an image acquisition unit (13) which is configured to acquire an image (1000), wherein the image (1000) comprises an industrial plant, an optoelectronically readable code (1200) and a personal feature (1100);
- a memory unit (11, 21) which is configured to store the acquired image (1000); and
- a processing unit (12, 22) which is configured to identify the personal feature (1100) in the image (1000) and to obscure the personal feature (1100) in the image (1000),
wherein the apparatus (10) is further configured to then crop the image (1000) to a part region comprising the optoelectronically readable code (1200) such that further information not necessary for the reading out of the optoelectronically readable code (1200) is removed, and to read out the optoelectronically readable code (1200).

## Revendications

1. Procédé (100) pour anonymiser une image acquise d'une installation industrielle, comprenant les étapes consistant à :
- acquérir (101) une image (1000) au moyen d'une unité d'acquisition d'image (13), l'image comprenant une installation industrielle, un code (1200) lisible par voie optoélectronique, et une caractéristique personnelle (1100) ;
- identifier (105) la caractéristique personnelle (1100) dans l'image (1000) ;
- brouiller (106) la caractéristique personnelle (1100) dans l'image (1000) ;
- ensuite découper l'image (1000) en une zone partielle comprenant le code (1200) lisible par voie optoélectronique, de manière à supprimer d'autres informations, non nécessaires à lire le code (1200) lisible par voie optoélectronique ; et
- lire (108) le code (1200) lisible par voie optoélectronique.

2. Procédé (100) selon la revendication précédente 1,
dans lequel l'identification (105) comprend une segmentation de la caractéristique personnelle (1100) dans l'image (1000).

3. Procédé (100) selon la revendication précédente 2,
dans lequel l'identification (105) et/ou la segmentation est effectuée à l'aide d'un réseau neuronal.

4. Procédé (100) selon l'une des revendications précédentes,
dans lequel le brouillage (106) comprend une pixellisation de la caractéristique personnelle (1100) dans l'image (1000).

5. Procédé (100) selon l'une des revendications précédentes,
dans lequel le brouillage (106) comprend la suppression de la caractéristique personnelle (1100) de l'image (1000).

6. Procédé (100) selon l'une des revendications précédentes,
comprenant en outre l'étape consistant à :
- stocker (110) l'image comportant la caractéristique personnelle (1100) brouillée.

7. Procédé (100) selon la revendication précédente 6,
dans lequel le stockage (110) de l'image comprend une transmission (109) à une unité de stockage distante (21).

8. Procédé (100) selon l'une des revendications précédentes,
comprenant en outre les étapes consistant à :
- crypter (102) l'image acquise (1000) ;
- transmettre (103) l'image acquise (1000) à une unité de calcul distante (22) ; et
- décrypter (104) l'image acquise (1000) au niveau de l'unité de calcul distante (22).

9. Procédé (100) selon la revendication précédente 8,
dans lequel l'identification (105) et/ou la segmentation est effectuée au niveau de l'unité de calcul distante (22).

10. Dispositif (10) pour anonymiser une image acquise d'une installation industrielle, comprenant :
- une unité d'acquisition d'image (13) conçue pour acquérir une image (1000), l'image (1000) comprenant une installation industrielle, un code (120) lisible par voie optoélectronique, et une caractéristique personnelle (1100) ;
- une unité de stockage (11, 21) conçue pour stocker l'image acquise (1000) ; et
- une unité de calcul (12, 22) conçue pour identifier la caractéristique personnelle (1100) dans l'image (1000) et pour brouiller la caractéristique personnelle (1100) dans l'image (1000),
le dispositif (10) étant en outre conçu pour ensuite découper l'image (1000) en une zone partielle, comprenant le code (1200) lisible par voie optoélectronique, de manière à supprimer d'autres informations, non nécessaires à lire le code (1200) lisible par voie optoélectronique, et pour lire le code (1200) lisible par voie optoélectronique.
